# EUROPÄISCHE PATENTSCHRIFT

(11) **EP 3 773 976 B1**
(45) Veröffentlichungstag und Bekanntmachung des Hinweises auf die Patenterteilung: **12.07.2023**
(21) Anmeldenummer: 19719167.9
(22) Anmeldetag: 02.04.2019
(51) Int. Cl.: B01D 33/067, B01D 33/073, B01D 33/09, B01D 33/80

(54) **VORRICHTUNG UND VERFAHREN ZUR MESSUNG EINER FILTERKUCHENDICKE**
DEVICE AND METHOD FOR MEASURING A FILTER CAKE THICKNESS
DISPOSITIF ET PROCÉDÉ POUR LA MESURE DE L'ÉPAISSEUR D'UN GÂTEAU DE FILTRATION

(30) Priorität: 06.04.2018 DE 102018205236
(43) Veröffentlichungstag der Anmeldung: 17.02.2021
(73) Patentinhaber: BHS-Sonthofen GmbH, 87527 Sonthofen (DE)
(72) Erfinder: SCHÄFER, Martin, 87527 Sonthofen (DE); STEIDL, Detlef, 87527 Sonthofen (DE); SÜSS, Wolfgang, 87527 Sonthofen (DE)
(74) Vertreter: Herzog, Markus
(86) Internationale Anmeldenummer: PCT/EP2019/058285
(87) Internationale Veröffentlichungsnummer: WO 2019/193002

(56) Entgegenhaltungen:
- EP-A1- 2 520 348
- WO-A1-2015/092152
- JP-A- 2001 038 344

## Beschreibung

Die vorliegende Erfindung betrifft einen Druckdrehfilter nach dem Oberbegriff des Anspruchs 1.

Die Anmelderin vertreibt seit vielen Jahren Druckfilter. Bei derartigen Druckdrehfiltern wird eine Suspension, welche ein Gemisch aus Flüssigkeit und Feststoffen ist, auf eine rotierende Filtertrommel aufgebracht. Die Filtertrommel ist derart ausgebildet, dass Flüssigkeit der Suspension durch eine Wandung der Filtertrommel hindurchtreten kann, wohingegen Feststoffe der Suspension an einer Oberfläche der Filtertrommel verbleiben. Folglich entsteht an der Oberfläche der Filtertrommel eine Feststoffschicht, welche in Fachkreisen als "Filterkuchen" bezeichnet wird.

Der Filterkuchen kann je nach Art des Druckdrehfilters beispielsweise nach einer vollständigen Rotation der Filtertrommel abgetragen werden, um neue zu filtrierende Suspension auf die Filtertrommel, zum Beispiel in an der Filtertrommel ausgebildete Zellen, einbringen zu können.

Um den Wirkungsgrad eines derartigen Druckdrehfilters zu verbessern, ist es erstrebenswert, dass eine entsprechende Filtrationszone der Filtertrommel möglichst zu 100% gefüllt ist, wobei jedoch eine Überfüllung zu vermieden ist.

Bekannte Einrichtungen versuchen die Filterkuchendicke über eine Masse- bzw. Volumenstrommessung in der Suspensionszuführung zu bestimmen. Diese Messmethode lässt jedoch nur grob auf die Filterkuchendicke schließen. Es gibt verschiedene Störgrößen, die die Filterkuchendicke beeinflussen, jedoch von dieser indirekten Messmethode nicht erfasst werden. Beispielsweise ändert sich die Filterkuchendicke über die Dichte des Feststoffs, welche anhand der dargestellten Messmethode nicht erfasst werden kann.

Aus dem Dokument WO 2015/092152 A1, welches als nächstliegender Stand der Technik erachtet wird, ist ein Druckdrehfilter bekannt, welcher eine Filtertrommel und ein diese umgebendes Gehäuse umfasst, wobei der Druckdrehfilter einen Sensor umfasst, um eine Filterkuchendicke zu erfassen. Ferner sei auf die Dokumente JP 2001 038344 A und EP 2 520 348 A1 hingewiesen.

Daher ist es eine Aufgabe der vorliegenden Erfindung eine Messmethode bereitzustellen, welche unabhängig von derartigen Störgrößen die Filterkuchendicke messen kann.

Diese Aufgabe wird durch einen Druckdrehfilter gemäß Anspruch 1 gelöst.

Es sei bereits an dieser Stelle erwähnt, dass sich die "Dicke des Filterkuchens" auf eine Ausdehnung der Filtratschicht auf der Filtertrommel in einer bezüglich der Filtertrommel radialen Richtung bezieht.

Die erfindungsgemäße Sensoranordnung ermöglicht eine direkte Messung der Filterkuchenschicht, so dass die tatsächliche Dicke dieser Filterkuchenschicht erfasst werden kann. Das hierzu von dem Sensor emittierte Licht erreicht den Filterkuchen mit einer vorbestimmten Eigenschaft, wie beispielsweise einer vorbestimmten Laufzeit von dem Sensor bis zu dem Filterkuchen oder einem vorbestimmten Winkel relativ zu der Oberfläche des Filterkuchens, auf welche das Licht auftrifft, oder einer vorbestimmten Farbe oder Ähnliches. Diese vorbestimmte Eigenschaft wird aufgrund der Reflexion des Lichts an dem Filterkuchen derart verändert, dass das von dem Sensor empfangene reflektierte Licht wenigstens eine von den Eigenschaften des emittierten Lichts abweichende Eigenschaft aufweist. Diese Abweichung der wenigstens einen zu vergleichenden Eigenschaft zwischen emittiertem Licht und empfangenem Licht dient der Verarbeitungseinheit als Berechnungsgrundlage für die Dicke des Filterkuchens.

Dabei kann es vorteilhaft sein, dass der Druckdrehfilter eine mit der Verarbeitungseinheit betriebsmäßig verbundene Speichereinheit umfasst, welche Werte der Eigenschaften des emittierten und/oder empfangenen Lichts speichert. Die Speichereinheit kann somit bereits gespeicherte Werte zu Beginn des Betriebs des Druckdrehfilters umfassen als auch während des Betriebs des Druckdrehfilters Werte speichern. Beispielsweise kann in der Speichereinheit eine Laufzeit des Lichts von dem Sensor bis zur Oberfläche der Filtertrommel, beispielsweise bis zu dem Boden einer unbefüllten Filterzelle, und zurück zu dem Sensor gespeichert sein. Wird nun von dem Sensor eine Laufzeit des Lichts erfasst, welche kleiner ist als die voranstehend beschriebene gespeicherte Laufzeit, so kann die Verarbeitungseinheit eine Differenz dieser beiden Laufzeiten, durch Vergleich der gemessenen Laufzeit mit der gespeicherten Laufzeit, zur Berechnung der Dicke des Filterkuchens verwenden. Beispielsweise kann die Laufzeit des Lichts für eine leere Zelle 2,33 ns, für eine halbvolle Zelle 1,83 ns und für eine vollständig gefüllte Zelle 1,33 ns betragen. In analoger Weise kann in der Speichereinheit ein Winkel gespeichert sein, welchen ein von dem Sensor emittierter Lichtstrahl zu einem in eine Empfangseinheit des Sensors einfallenden Lichtstrahl bildet. Eine Abweichung von einem gemessenen Winkel zu diesem gespeicherten Winkel kann entsprechend zur Bestimmung der Dicke der Filterkuchenschicht verwendet werden.

Der Sensor und die Verarbeitungseinheit können als integrale Komponente ausgebildet sein.

Der Sensor ist erfindungsgemäß außerhalb eines Prozessraums des Druckdrehfilters angeordnet. Der Sensor kann so von den im Prozessraum auftretenden Drücken und Temperaturen geschützt werden. Somit kann ein Sensor verwendet werden, welcher deutlich geringere Anforderungen, zum Beispiel auch bezüglich einer Explosionssicherheits- und anderen Zulassungen, erfüllen muss. Auf diese Weise können nicht nur die Kosten für den Sensor bzw. den damit verbundenen Aufbau reduziert werden, sondern es können auch Messverfahren zur Anwendung kommen, welche für einen in dem Prozessraum angeordneten Sensor nicht zur Verfügung stehen könnten. Darüber hinaus kann hierdurch eine Lebensdauer des Sensors erhöht und/oder eine Verschmutzung des Sensors reduziert werden.

In einer Weiterbildung der vorliegenden Erfindung kann der Sensor derart angeordnet sein, dass das emittierte Licht im Wesentlichen orthogonal auf die Oberfläche des Filterkuchens trifft. Dabei kann der lichtdurchlässige Abschnitt des Gehäuses beispielsweise durch ein in dem Gehäuse angeordnetes Schauglas gebildet sein, wobei das von dem Sensor emittierte Licht senkrecht durch die Oberfläche des Schauglases tritt. Insbesondere kann eine derartige Anordnung des Sensors relativ zu dem Filterkuchen ermöglichen, dass ein zwischen dem Sensor und dem Filterkuchen zu durchlaufender Abstand möglichst gering ist. In dem Fall, dass Feststoffe in dem Abstand zwischen dem Sensor und dem Filterkuchen, zum Beispiel Schwebstoffe in dem Raum zwischen Sensor und Filterkuchen, umfasst sind, kann eine Abschwächung und/oder Verfälschung von dem emittiertem Licht in Bezug auf das empfangene Licht reduziert oder sogar vermieden werden.

In einer vorteilhaften Ausbildung der vorliegenden Erfindung kann der Sensor ein Lasertriangulations-Sensor sein. Derartige Sensoren basieren auf dem Prinzip, dass der Sensor einen Laserpunkt oder eine Anordnung von Laserpunkten, insbesondere eine 600 Laserpunkte umfassende Linie, emittiert. Das Laserlicht wird auf der Oberfläche des Filterkuchens gestreut, wobei durch eine Blende in dem Sensor Lichtstrahlen auf eine Empfangseinheit des Sensors treffen können. Je nach Position des Lichtpunkts bzw. der Lichtpunkte auf der Empfangseinheit des Sensors, bei bekannter Distanz zwischen der lichtemittierenden Einheit und der Empfangseinheit bzw. zwischen der Blende und der Empfangseinheit, kann ein Abstand zum Filterkuchen bestimmt werden. Aufgrund der Tatsache, dass die Oberfläche des Filterkuchens oftmals nicht homogen ausgebildet sein kann, sondern Vertiefungen aufweisen kann, durch welche beispielsweise Flüssigkeit aus der Suspension abfließt, kann die Verwendung eines Sensors, welcher eine Mehrzahl an Laserpunkten abgibt und empfängt, eine Erfassungsgenauigkeit der tatsächlichen Dicke des Filterkuchens verbessern.

Alternativ kann der Sensor auch ein Laserlaufzeitmessungs-Sensor sein. Bei diesem Sensortyp wird eine Laufzeit zwischen dem Zeitpunkt, zu welchem Licht von dem Sensor emittiert wird, zu dem Zeitpunkt, zu welchem dieses von dem Filterkuchen reflektierte Licht wieder empfangen wird, gemessen. Ein dicker Filterkuchen resultiert, aufgrund der relativ zu dem Sensor näheren Oberfläche des Filterkuchens, in einer kürzeren Laufzeit des emittierten Lichts als ein dünner Filterkuchen. Einerseits kann über eine Messreihe an Laufzeitmessungen eine Veränderung der Laufzeit erfasst werden und so auf eine Veränderung der Filterkuchendicke geschlossen werden. Anderseits kann eine Laufzeit des Laserstrahls bis zur blanken Filtertrommel, das heißt einer Filtertrommel ohne darauf gebildetem Filterkuchen, bekannt sein. Vorteilhafterweise können auch Laufzeiten des Laserstrahls für vorbestimmte Filterkuchendicken bekannt sein, z.B. von 1 cm bis 150 cm in 1 cm-Schritten, so dass eine Laufzeit des Laserstrahls direkt mit einem bekannten Wert verglichen werden kann, um die Dicke der Filterkuchenschicht zu bestimmen.

Insbesondere bei der Verwendung eines Laserlaufzeitmessungs-Sensors, aber nicht darauf beschränkt, kann der Sensor gepulstes Licht emittieren. Unter "gepulstem Licht" ist hier Licht zu verstehen, welches in einer vorbestimmten Taktfrequenz, das heißt gemäß vorbestimmten Ein- und Ausschaltintervallen, emittiert wird. Basierend auf einer bekannten Pulsrate des emittierten Lichts kann für jeden ausgesandten Lichtpuls separat eine Laufzeit oder ein Winkel oder Ähnliches gemessen werden.

Alternativ oder zusätzlich kann der Sensor Licht kontinuierlich emittieren. Insbesondere unter Verwendung eines Lasertriangulations-Verfahrens, aber nicht darauf beschränkt, kann eine kontinuierliche Emission von Licht und somit ein kontinuierliches Empfangen von Licht zu einer lückenlosen Überwachung der Dicke des Filterkuchens führen. Um eine Messung der oben erwähnten Vertiefungen in der Filterkuchenschicht zu kompensieren, kann zum Beispiel die Verarbeitungseinheit mit einem Algorithmus versehen sein, welcher Messabweichungen, welche auf eine lokal begrenzte Vertiefung in der Oberfläche der Filterkuchenschicht hindeuten, bei der Bestimmung der Dicke der Filterkuchenschicht außer Betracht lassen kann. Ferner kann zum Beispiel die Verarbeitungseinheit mit einem Algorithmus versehen sein, welche strukturbedingte und bekannte Veränderungen in der gemessenen Oberfläche erfasst bzw. bei der Bestimmung der Dicke der Filterkuchenschicht außer Betracht lässt, wie beispielsweise die zwischen den einzelnen Filterzellen der Filtertrommel angeordneten Trennwände.

Der Druckdrehfilter kann ferner eine Steuereinheit umfassen, welche dazu eingerichtet ist, auf Grundlage der von der Verarbeitungseinheit bestimmten Filterkuchendicke eine Rotationsgeschwindigkeit der Filtertrommel einzustellen. Demgemäß kann bei einer nicht voll ausgenutzten maximal möglichen Dicke des Filterkuchens die Rotationsgeschwindigkeit der Filtertrommel reduziert werden, so dass auf einen Abschnitt, zum Beispiel eine Filterzelle, der Filtertrommel mehr Suspension aufgebracht werden kann. Analog kann die Steuereinheit die Rotationsgeschwindigkeit der Filtertrommel erhöhen, wenn die bestimmte Dicke der Filterkuchenschicht auf die Gefahr einer Überfüllung der Filtertrommel bzw. der Zellen der Filtertrommel schließen lässt.

Die Anpassung der Rotationsgeschwindigkeit der Filtertrommel kann hier sowohl automatisch im Sinne einer sich selbst regelnden Steuervorrichtung als auch auf Grundlage einer Bedienung eines Benutzers, an welchen beispielsweise das von der Verarbeitungseinheit bestimmte Signal ausgegeben wird, welches die Dicke des Filterkuchens anzeigt, durchgeführt werden.

In einem zweiten Aspekt betrifft die vorliegende Erfindung ein Verfahren zum Bestimmen einer Dicke eines Filterkuchens, welcher beim Filtern von zu filtrierendem Material auf einer Oberfläche einer Filtertrommel eines erfindungsgemäßen Druckdrehfilters gebildet wird, dadurch gekennzeichnet, dass ein Sensor Licht in Richtung des Filterkuchens emittiert und von dem Filterkuchen reflektiertes Licht empfängt, und dass eine Verarbeitungseinheit Eigenschaften des emittierten Lichts mit Eigenschaften des empfangenen Lichts vergleicht, um so die Dicke des Filterkuchens und/oder eine Änderung in der Dicke des Filterkuchens zu bestimmen.

In Bezug auf die Vorteile und Möglichkeiten des erfindungsgemäßen Verfahrens sei an dieser Stelle explizit auf die Merkmale und die Beschreibung bezüglich der Vorrichtung des Druckdrehfilters verwiesen.

Die Verarbeitungseinheit kann ein Signal an eine Steuereinheit ausgeben, welche auf Grundlage des von der Verarbeitungseinheit ausgegebenen Signals eine Rotationsgeschwindigkeit der Filtertrommel einstellt.

Auch diesbezüglich sei auf die obige Beschreibung in Bezug auf den Druckdrehfilter verwiesen.

Im Folgenden wird die Erfindung anhand der begleitenden Zeichnungen in größerem Detail beschrieben werden.

### Es stellt dar:

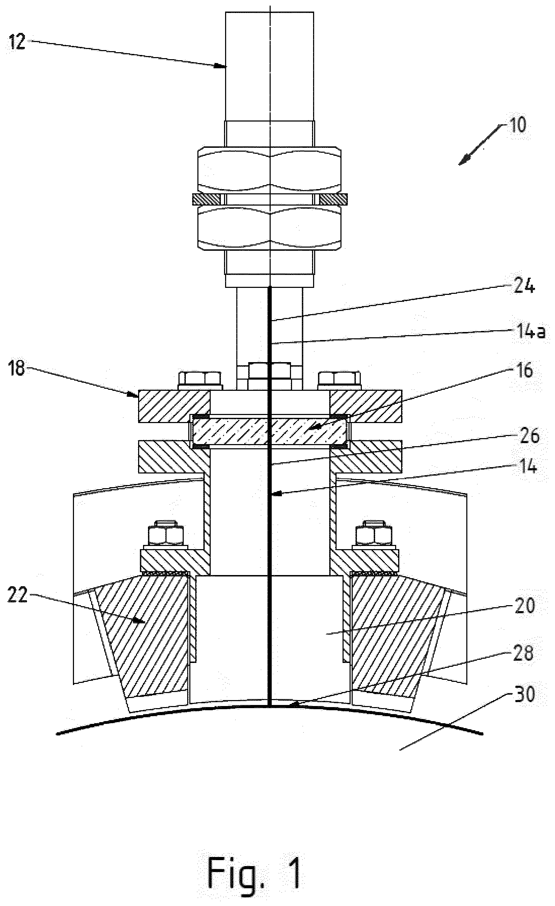

- Figur 1: eine schematische Seitenquerschnittsansicht einer Sensoranordnung an einem Abschnitt eines Gehäuses des erfindungsgemäßen Druckdrehfilters.

In Figur 1 ist ein Abschnitt eines Druckdrehfilters 10 dargestellt. In dem Abschnitt des Druckdrehfilters 10 ist ein Sensor 12 zu erkennen, welcher einen Laserstrahl 14 emittiert. Der Laserstrahl 14 verläuft dabei von dem Sensor 12 durch ein Schauglas 16, welches in einem Stutzen 18 angeordnet ist. Der Stutzen 18 ist an einer Öffnung 20 eines Gehäuses 22 des Druckdrehfilters 10 derart angeordnet, dass er mit dem Gehäuse 22 luftdicht abschließt und das Schauglas 16 luftdicht gegenüber einer Außenseite des Gehäuses 22 aufnimmt. Somit unterteilt das Schauglas 16 den Laserstrahl 14 in einen außerhalb eines Prozessraums des Druckdrehfilters angeordneten Abschnitt 24 und einen innerhalb des Prozessraums angeordneten Abschnitt 26. Demgemäß ist in Figur 1 gut zu erkennen, dass der Sensor 12 außerhalb des Prozessraums des Druckdrehfilters angeordnet ist.

Der Laserstrahl 14 trifft dann auf eine Oberfläche eines Filterkuchens 28, von welcher er reflektiert wird. Der Filterkuchen 28 bildet sich beim Filtrieren von Suspension auf der Oberfläche einer Filtertrommel 30. Ein Teil des reflektierten Laserstrahls 14a (in Figur 1 mit dem emittierten Laserstrahl 14 überlagert dargestellt) tritt anschließend wieder durch das Schauglas 16 und in eine Empfangseinheit des Sensors 12 ein.

Entsprechend einem Unterschied zwischen Eigenschaften des von dem Sensor 12 emittierten Lichts 14 und Eigenschaften des von der Oberfläche des Filterkuchens 28 reflektierten Lichts 14a, wie beispielsweise einer Gesamtlaufzeit von Emission zu Empfang des Lichts oder einem Winkel zwischen dem emittierten Laserstrahl 14 und dem in die Empfangseinheit des Sensors 12 eintretenden Laserstrahl 14a, welcher von dem Filterkuchen 28 reflektiert worden ist, kann ein Abstand der Oberfläche des Filterkuchens 28 relativ zu dem Sensor 12 und somit eine Dicke des Filterkuchens 28 ermittelt werden.

In der in Figur 1 gezeigten Ausführungsform basiert der Sensor 12 auf einem Laufzeitmessungsverfahren. Dabei kann ein Puls eines Laserstrahls von dem Sensor ausgesandt werden, welcher von der Oberfläche des Filterkuchens 28 reflektiert wird und anschließend wieder in die Empfangseinheit des Sensors 12 eintritt. Entweder kann über eine Messreihe an Laufzeitmessungen eine Veränderung der Laufzeit erfasst werden und so auf eine Veränderung der Filterkuchendicke geschlossen werden oder es kann eine Laufzeit des Laserstrahls bis zur blanken Filtertrommel, das heißt einer Filtertrommel ohne darauf gebildetem Filterkuchen, bekannt sein. Vorteilhafterweise können auch Laufzeiten des Laserstrahls für vorbestimmte Filterkuchendicken bekannt sein, z.B. von 1 cm bis 150 cm in 1cm-Schritten, so dass eine Laufzeit des Laserstrahls direkt mit einem bekannten Wert verglichen werden kann, um die Dicke der Filterkuchenschicht zu bestimmen.

## Patentansprüche

1. Druckdrehfilter (10), umfassend
- eine Filtertrommel (30), an welcher zu filtrierendes Material gefiltert wird, wobei an einer Oberfläche der Filtertrommel (30) ein Filterkuchen (28) entsteht, und
- ein Gehäuse (22), welches die Filtertrommel (30) umgibt und in welchem die Filtertrommel (30) drehbar gelagert ist, wobei an dem Gehäuse (22) ein Sensor (12) angebracht ist, welcher dazu eingerichtet ist Licht (14) durch einen lichtdurchlässigen Abschnitt (16) des Gehäuses (22) in Richtung des Filterkuchens (28) zu emittieren und von dem Filterkuchen (28) reflektiertes Licht (14a) durch den lichtdurchlässigen Abschnitt (16) des Gehäuses (22) zu empfangen, wobei der Druckdrehfilter (10) ferner eine Verarbeitungseinheit umfasst, welche dazu eingerichtet ist, Eigenschaften des emittierten Lichts (14) mit denen des empfangenen Lichts (14a) zu vergleichen und eine absolute Dicke des Filterkuchens (28) und/oder eine Änderung in der Dicke des Filterkuchens (28) über eine vorbestimmte Zeit zu ermitteln, **dadurch gekennzeichnet, dass** der Sensor (12) außerhalb eines Prozessraums des Druckdrehfilters (10) angeordnet ist, in welchem ein Filtrationsprozess stattfindet und welcher dazu eingerichtet ist, einen von einer Außenumgebung des Druckdrehfilters (10) abweichenden Druck und/oder eine von einer Außenumgebung des Druckdrehfilters (10) abweichende Temperatur aufzuweisen.

2. Druckdrehfilter (10) nach Anspruch 1,
**dadurch gekennzeichnet, dass** der Druckdrehfilter (10) ferner eine mit der Verarbeitungseinheit betriebsmäßig verbundene Speichereinheit umfasst, welche Werte der Eigenschaften des emittierten und/oder empfangenen Lichts (14a) speichert.

3. Druckdrehfilter (10) nach einem der Ansprüche 1 oder 2,
**dadurch gekennzeichnet, dass** der Sensor (12) derart angeordnet ist, dass das emittierte Licht (14) im Wesentlichen orthogonal auf die Oberfläche des Filterkuchens (28) trifft.

4. Druckdrehfilter (10) nach einem der Ansprüche 1 bis 3,
**dadurch gekennzeichnet, dass** der Sensor (12) ein Lasertriangulations-Sensor ist.

5. Druckdrehfilter (10) nach einem der Ansprüche 1 bis 4,
**dadurch gekennzeichnet, dass** der (12) Sensor ein Laserlaufzeitmessungs-Sensor ist.

6. Druckdrehfilter (10) nach einem der Ansprüche 1 bis 5,
**dadurch gekennzeichnet, dass** der Sensor (12) gepulstes Licht (14) emittiert.

7. Druckdrehfilter (10) nach einem der Ansprüche 1 bis 4,
**dadurch gekennzeichnet, dass** der Sensor (12) Licht (14) kontinuierlich emittiert.

8. Druckdrehfilter (10) nach einem der Ansprüche 1 bis 7,
**dadurch gekennzeichnet, dass** der Druckdrehfilter (10) ferner eine Steuereinheit umfasst, welche dazu eingerichtet ist, auf Grundlage der von der Verarbeitungseinheit bestimmten Filterkuchendicke eine Rotationsgeschwindigkeit der Filtertrommel (30) einzustellen.

9. Verfahren zum Bestimmen einer Dicke eines Filterkuchens (28), welcher beim Filtern von zu filtrierendem Material auf einer Oberfläche einer Filtertrommel (30) eines Druckdrehfilters (10) nach einem der Ansprüche 1 bis 8 gebildet wird,
**dadurch gekennzeichnet, dass** ein Sensor (12) Licht (14) in Richtung des Filterkuchens (28) emittiert und von dem Filterkuchen (28) reflektiertes Licht (14a) empfängt, und
dass eine Verarbeitungseinheit Eigenschaften des emittierten Lichts (14) mit Eigenschaften des empfangenen Lichts (14a) vergleicht, um so die Dicke des Filterkuchens (28) und/oder eine Änderung in der Dicke des Filterkuchens (28) zu bestimmen.

10. Verfahren zum Bestimmen einer Dicke eines Filterkuchens (28) nach Anspruch 9,
**dadurch gekennzeichnet, dass** die Verarbeitungseinheit ein Signal an eine Steuereinheit ausgibt, welche auf Grundlage des von der Verarbeitungseinheit ausgegebenen Signals eine Rotationsgeschwindigkeit der Filtertrommel (30) einstellt.

## Claims

1. Rotary pressure filter (10), comprising:
- a filter drum (30), at which a material to be filtered is filtered, wherein a filter cake (28) is formed on a surface of the filter drum (30), and
- a housing (22), which surrounds the filter drum (30) and in which the filter drum (30) is rotatably mounted,
wherein a sensor (12) is attached to the housing (22), which is configured to emit light (14) through a light-permeable section (16) of the housing (22) in the direction of the filter cake (28) and to receive light (14a) reflected from the filter cake (28) through the light-permeable section (16) of the housing (22),
wherein the rotary pressure filter (10) further comprises a processing unit configured to compare properties of the emitted light (14) with those of the received light (14a) and to determine an absolute thickness of the filter cake (28) and/or a change in the thickness of the filter cake (28) over a predetermined time,
**characterized in that** the sensor (12) is arranged outside of a process chamber of the rotary pressure filter (10), in which a filtration process takes place and which is configured to exhibit a pressure deviating from an external environment of the rotary pressure filter (10) and/or a temperature deviating from an external environment of the rotary pressure filter (10).

2. Rotary pressure filter (10) according to claim 1,
**characterized in that** the rotary pressure filter (10) further comprises a storage unit operatively connected to the processing unit, which stores values of the properties of the emitted and/or received light (14a).

3. Rotary pressure filter (10) according to claim 1 or 2,
**characterized in that** the sensor (12) is arranged such that the emitted light (14) strikes the surface of the filter cake (28) substantially orthogonally.

4. Rotary pressure filter (10) according to any of claims 1 to 3,
**characterized in that** the sensor (12) is a laser triangulation sensor.

5. Rotary pressure filter (10) according to any of claims 1 to 4,
**characterized in that** the sensor (12) is a laser transit time measurement sensor.

6. Rotary pressure filter (10) according to any of claims 1 to 5,
**characterized in that** the sensor (12) emits pulsed light (14).

7. Rotary pressure filter (10) according to any of claims 1 to 4,
**characterized in that** the sensor (12) continuously emits light (14).

8. Rotary pressure filter (10) according to any of claims 1 to 7,
**characterized in that** the rotary pressure filter (10) further comprises a control unit configured to set a rotational speed of the filter drum (30) on the basis of the filter cake thickness determined by the processing unit.

9. Method for determining a thickness of a filter cake (28), which is formed on a surface of a filter drum (30) of a rotary pressure filter (10) according to any of claims 1 to 8 during filtration of material to be filtered,
**characterized in that** a sensor (12) emits light (14) in the direction of the filter cake (28) and receives light (14a) reflected from the filter cake (28), and that a processing unit compares properties of the emitted light (14) with properties of the received light (14a) so as to determine a thickness of the filter cake (28) and/or a change in the thickness of the filter cake (28).

10. Method for determining a thickness of a filter cake (28) according to claim 9, **characterized in that** the processing unit outputs a signal to the control unit, which sets a rotational speed of the filter drum (30) on the basis of the signal output by the processing unit.

## Revendications

1. Filtre rotatif sous pression (10) comprenant
- un tambour filtrant (30), au niveau duquel du matériau à filtrer est filtré, dans lequel un gâteau de filtration (28) apparaît au niveau d'une surface du tambour filtrant (30), et
- un boîtier (22) qui entoure le tambour filtrant (30) et dans lequel le tambour filtrant (30) est logé de manière rotative,
dans lequel un capteur (12) est monté au niveau du boîtier (22), lequel est conçu afin d'émettre de la lumière (14) par une section (16) perméable à la lumière du boîtier (22) en direction du gâteau de filtration (28) et de recevoir de la lumière (14a) réfléchie par le gâteau de filtration (28) par la section (16) perméable à la lumière du boîtier (22),
dans lequel le filtre rotatif sous pression (10) comporte de plus une unité de traitement qui est conçue afin de comparer des propriétés de la lumière émise (14) avec celles de la lumière reçue (14a) et de déterminer une épaisseur absolue du gâteau de filtration (28) et/ou une modification de l'épaisseur du gâteau de filtration (28) sur un temps prédéterminé,
**caractérisé en ce que** le capteur (12) est agencé en dehors d'un espace de processus du filtre rotatif sous pression (10), dans lequel un processus de filtration a lieu et qui est conçu afin de présenter une pression divergeant d'un environnement extérieur du filtre rotatif sous pression (10) et/ou une température divergeant d'un environnement extérieur du filtre rotatif sous pression (10).

2. Filtre rotatif sous pression (10) selon la revendication 1,
**caractérisé en ce que** le filtre rotatif sous pression (10) comporte de plus une unité de mémoire reliée en fonctionnement à l'unité de traitement, laquelle mémorise des valeurs des propriétés de la lumière (14a) émise et/ou reçue.

3. Filtre rotatif sous pression (10) selon l'une quelconque des revendications 1 ou 2, **caractérisé en ce que** le capteur (12) est agencé de telle manière que la lumière (14) émise atteigne sensiblement orthogonalement la surface du gâteau de filtration (28).

4. Filtre rotatif sous pression (10) selon l'une quelconque des revendications 1 à 3, **caractérisé en ce que** le capteur (12) est un capteur de triangulation laser.

5. Filtre rotatif sous pression (10) selon l'une quelconque des revendications 1 à 4, **caractérisé en ce que** le capteur (12) est un capteur de mesure du temps de transit laser.

6. Filtre rotatif sous pression (10) selon l'une quelconque des revendications 1 à 5, **caractérisé en ce que** le capteur (12) émet de la lumière (14) pulsée.

7. Filtre rotatif sous pression (10) selon l'une quelconque des revendications 1 à 4, **caractérisé en ce que** le capteur (12) émet de la lumière (14) en continu.

8. Filtre rotatif sous pression (10) selon l'une quelconque des revendications 1 à 7, **caractérisé en ce que** le filtre rotatif sous pression (10) comporte de plus une unité de commande qui est conçue afin de régler sur la base de l'épaisseur de gâteau de filtration déterminée par l'unité de traitement une vitesse de rotation du tambour filtrant (30).

9. Procédé de détermination d'une épaisseur d'un gâteau de filtration (28) qui est formé lors de la filtration de matériau à filtrer sur une surface d'un tambour filtrant (30) d'un filtre rotatif sous pression (10) selon l'une quelconque des revendications 1 à 8,
**caractérisé en ce qu'**un capteur (12) émet de la lumière (14) en direction du gâteau de filtration (28) et reçoit de la lumière (14a) réfléchie par le gâteau de filtration (28), et
qu'une unité de traitement compare des propriétés de la lumière émise (14) avec des propriétés de la lumière reçue (14a) afin de déterminer ainsi l'épaisseur du gâteau de filtration (28) et/ou une modification de l'épaisseur du gâteau de filtration (28).

10. Procédé de détermination d'une épaisseur d'un gâteau de filtration (28) selon la revendication 9,
**caractérisé en ce que** l'unité de traitement distribue un signal à une unité de commande qui règle sur la base du signal distribué par l'unité de traitement une vitesse de rotation du tambour filtrant (30).
